# NEUE EUROPÄISCHE PATENTSCHRIFT

(11) **EP 2 648 947 B2**
(45) Veröffentlichungstag und Bekanntmachung des Hinweises auf die Entscheidung über den Einspruch: **26.08.2020**
(45) Hinweis auf die Patenterteilung: 25.02.2015
(21) Anmeldenummer: 11794460.3
(22) Anmeldetag: 06.12.2011
(51) Int. Cl.: B60T 7/04, B60T 15/14

(54) **BETRIEBSBREMSVENTIL MIT WENIGSTENS EINEM UNMITTELBAR DURCH EINEN RELAISKOLBEN BETÄTIGBAREN ELEKTRISCHEN SCHALTER**
SERVICE BRAKE VALVE WITH AT LEAST ONE ELECTRIC SWITCH DIRECTLY ACTUABLE BY A RELAY PISTON
SOUPAPE DE FREIN DE SERVICE COMPORTANT AU MOINS UN COMMUTATEUR ÉLECTRIQUE POUVANT ÊTRE DIRECTEMENT ACTIONNÉ PAR UN PISTON-RELAIS

(30) Priorität: 10.12.2010 DE 102010054052
(43) Veröffentlichungstag der Anmeldung: 16.10.2013
(73) Patentinhaber: KNORR-BREMSE Systeme für Nutzfahrzeuge GmbH, 80809 München (DE)
(72) Erfinder: SCHMAUDER, Thilo, 71732 Tamm (DE)
(74) Vertreter: Wiedemann, Markus
(86) Internationale Anmeldenummer: PCT/EP2011/071894
(87) Internationale Veröffentlichungsnummer: WO 2012/076514

(56) Entgegenhaltungen:
- EP-A1- 0 267 881
- DE-A1- 2 724 179
- DE-A1- 3 308 279
- DE-A1-102010 002 651
- US-E1- R E37 841

## Beschreibung

### Stand der Technik

Die Erfindung geht aus von einem Betriebsbremsventil für wenigstens einen pneumatischen Bremskreis einer pneumatischen oder elektro-pneumatischen Bremseinrichtung eines Fahrzeugs, beinhaltend ein Betriebsbremsventil-Gehäuse, einen von einer Fußbremsplatte betätigbaren Stößel, eine Stößelaufnahme mit Federteller, Federmittel zur Übertragung der auf den Stößel wirkenden Betätigungskräfte auf wenigstens einen Relaiskolben sowie wenigstens einen elektrischen Schalter zum Ändern eines elektrischen Signals unmittelbar nach Betätigung der Fußbremsplatte, gemäß dem Oberbegriff von Anspruch 1.

Bei elektro-pneumatischen Bremseinrichtungen von modernen Nutzfahrzeugen ist meist wenigstens ein vorrangiger elektrischer Bremskreis vorhanden, welchem ein elektrischer Kanal des Betriebsbremsventils zugeordnet ist, d.h. mit Betätigung der Fußbremsplatte des Betriebsbremsventils erzeugt eine Sensoreinrichtung ein elektrisches Signal abhängig vom Betätigungsweg, welches in ein elektronisches Bremssteuergerät eingesteuert, eine Ansteuerung von Magnetventilen verursacht, um einen der Bremsanforderung entsprechenden Bremsdruck in Betriebsbremszylinder einzusteuern. Parallel hierzu erzeugt die Betätigung der Fußbremsplatte des Betriebsbremsventils, dass der Stößel über den Federteller den Relaiskolben betätigt, um einen der Bremsanforderung entsprechenden Steuerdruck für nachgeordnete pneumatische Bremsventile zu erzeugen, zur Bildung eines redundanten Bremsdrucks, welcher in den Bremszylindern wirksam wird, wenn der vorrangige elektrische Bremskreis aufgrund eines Defekts ausgefallen ist.

Ein gattungsgemäßes Betriebsbremsventil ist aus der DE 27 24 179 A bekannt, wobei dort ein Stößel in eine Ausnehmung einer Stößelaufnahme ragt, welche durch einen Schaft mit einem Federteller verbunden ist, welcher durch Federmittel einen Relaiskolben betätigt. Der Federteller betätigt weiterhin über eine komplexe Hebelmechanik, welche unter anderem einen Betätigungshebel beinhaltet, mehrere Mikroschalter, die in einem Gehäuse des Betriebsbremsventils seitlich angeordnet sind. Die Mikroschalter erzeugen ein elektrisches Signal zum Betätigen eines Retarders, wenn die Fußbremsplatte getreten wird.

Dabei wird gefordert, dass ein solcher Mikroschalter unmittelbar nach Betätigung der Fußbremsplatte ein elektrisches Signal erzeugt, welches ein Zuspannen der Bremse repräsentiert. Hintergrund ist dabei, dass der Gesetzgeber fordert, dass aus Sicherheitsgründen beim Bremsen stets zwei unabhängige Bremskreise betätigt werden, um für den Fall, dass ein Bremskreis ausfällt, noch einen weiteren redundanten Bremskreis zur Verfügung zu haben.

Bei der oben beschriebenen Ausbildung einer Bremsanlage mit vorrangigem elektrischen Bremskreis und nachtrangigem pneumatischen Bremskreis müssen daher beide Bremskreise stets ansprechen können, wenn die Fußbremsplatte betätigt wird. Dies soll stets und daher insbesondere auch dann der Fall sein, wenn etwa ein mit einer derartigen Bremseinrichtung ausgestattetes Nutzfahrzeug mit ausgeschalteter Zündung bergab rollt. In einem solchen Fall dient der elektrische Schalter dazu, ein elektrisches Signal zu erzeugen bzw. das bisher von ihm erzeugte elektrische Signal zu ändern, um den durch die ausgeschaltete Zündung eigentlich deaktivierten elektrischen Bremskreis zu aktivieren, wodurch neben dem ohnehin betätigten pneumatischen Bremskreis auch der elektrische Bremskreis zur Verfügung steht.

Der elektrische Schalter, mit welchem die Aktivierung des weiteren Bremskreises wie etwa eines elektrischen Bremskreises oder eines Retarders vonstatten geht, ist meist ein Mikroschalter. Hierunter wird im Allgemeinen ein elektrischer Schalter verstanden, dessen Kontakte im geöffneten Zustand weniger als 3 mm Abstand voneinander haben. Eine bekannte Bauform ist beispielsweise der Mikroschalter mit schnappendem System. Weiterhin sind auch Bauformen als Öffner und Schließer sowie als Wechsler mit den drei Anschlüssen Öffnerkontakt, Schließerkontakt und Schaltzunge bekannt. Durch den geringen Kontaktabstand eignen sich Mikroschalter lediglich für das Schalten geringer Lasten. Nicht zuletzt dienen Mikroschalter dazu, ein der Lageposition von beweglichen Bauelementen, wie beispielsweise von Bauteilen eines eingangs beschriebenen Betriebsbremsventils zu erzeugen, insbesondere in der Funktion als Endlagenschalter.

Bei dem aus der DE 27 24 179 A bekannten Betriebsbremsventil erfolgt die Übertragung der Bewegung des Federtellers auf die Mikroschalter durch ein relativ komplexes Hebelgetriebe, was relativ viel Bauraum erfordert und außerdem eine gewisse Elastizität und Lagerspiel aufweist, wodurch die Bewegungsübertragung auch relativ nachgiebig ist.

Der vorliegenden Erfindung liegt daher die Aufgabe zugrunde, ein BetriebsBremsventil der eingangs erwähnten Art derart weiter zu entwickeln, dass es kompakter baut und eine mechanische Übertragung der Betätigungsbewegung auf den elektrischen Schalter mit möglichst wenig Nachgiebigkeit erfolgt.

Diese Aufgabe wird erfindungsgemäß durch die Merkmale von Anspruch 1 gelöst.

### Offenbarung der Erfindung

Die Erfindung basiert auf dem Gedanken, dass eine Betätigung von Betriebsbremsventilen drei Phasen beinhaltet. Wenn die Fußbremsplatte betätigt wird, bewegen sich der Stößel und der Federteller einerseits und der mit dem Federteller durch die Federmittel getriebene Relaiskolben andererseits zunächst synchron und gemeinsam. Nach einiger Zeit baut sich jedoch am Relaiskolben, der ein Doppelsitzventil betätigt, ein Gegendruck auf, so dass sich der Relaiskolben auswiegt und in seiner weiteren Bewegung gehemmt wird, so dass in dieser zweiten Phase der weiterhin durch die Fußbremsplatte betätigte Stößel und der Federteller einen größeren Weg zurücklegen als der Relaiskolben. In der nachfolgenden dritten Phase bewegen sich der Stößel und der Federteller einerseits und der Relaiskolben andererseits wiederum synchron und gemeinsam.

Da der Gesetzgeber fordert, dass weitere Bremskreis, hier insbesondere der elektrischen Bremskreis "unmittelbar" nach einer Betätigung der Fußbremsplatte aktiviert wird, so betrifft dies die oben beschriebene erste Phase, in welcher sich der Stößel und der Federteller synchron und gemeinsam mit dem Relaiskolben bewegen. Daher ist es in dieser ersten Phase möglich, durch den elektrischen Schalter nicht wie beim eingangs beschriebenen Stand der Technik eine Bewegung des Stößels bzw. des Federtellers zu erfassen, sondern vielmehr eine Bewegung des Relaiskolbens aus seiner Nulllage, welche die gelöste Bremse repräsentiert. Somit ist eine Bewegung des Relaiskolbens aus seiner Nulllage mit einem Bremsbetätigungs- oder Bremsanforderungssignal unmittelbar nach einer Betätigung der Bremse bzw. der Fußbremstrittplatte gleichsetzbar.

Gemäß der Erfindung wird der elektrische Schalter daher unmittelbar vom Relaiskolben betätigt. Mit anderen Worten ist der elektrische Schalter derart im oder am Betriebsbremsventil-Gehäuse angeordnet, dass er unmittelbar und ohne Vorsehen von Übertragungselementen vom Relaiskolben betätigbar ist.

Die Vorteile dieser Vorgehensweise liegen zum einen darin, dass wegen der unmittelbaren Betätigung des elektrischen Schalters auf zusätzliche Übertragungselemente verzichtet werden kann. Insbesondere wirkt der Relaiskolben direkt auf ein Betätigungsorgan des elektrischen Schalters, welches ein Bauteil dieses Schalters und nicht etwa ein zusätzliches Übertragungselement darstellt. Durch den Verzicht auf zusätzliche kraft- bzw. bewegungsübertragende Bauteile wird Bauraum gespart, was besonders im Hinblick auf den knappen Bauraum im Bereich des bodenseitig im Fußraum der Fahrgastzelle angeordneten Fußbremsmoduls, welches das Betriebsbremsventil umfasst, vorteilhaft ist.

Zum andern wirkt sich der durch die erfindungsgemäßen Maßnahmen mögliche Verzicht auf zusätzliche kraft- bzw. bewegungsübertragende Bauteile und deren Justierung günstig auf die Toleranzen aus. Denn diese spielen nunmehr nur noch hinsichtlich der Positionierung des elektrischen Schalters relativ zur Nulllage des Relaiskolbens eine Rolle.

Weiterhin ist der elektrische Schalter in dem Betriebsbremsventil-Gehäuse gehalten und beispielsweise derart angeordnet, dass eine senkrecht zur Bewegungsrichtung des Relaiskolbens angeordnete Stirnfläche des Relaiskolbens ein Betätigungsorgan des elektrischen Schalters unmittelbar betätigt, wobei die Betätigungsrichtung des Betätigungsorgans des elektrischen Schalters parallel zur Bewegungsrichtung des Relaiskolbens ist.

Weiterhin ist der elektrische Schalter in einem einen oberen Anschlag für eine senkrecht zur Bewegungsrichtung des Relaiskolbens angeordnete Stirnfläche des Relaiskolbens aufweisenden Gehäusedeckel des Betriebsbremsventil-Gehäuses gehalten, insbesondere in einer zum Relaiskolben hin zumindest teilweise offenen Ausnehmung einer zylindrischen Wandung des Gehäusedeckels. Mit dieser zylindrischen Wandung ist dann der Gehäusedeckel beispielsweise in ein weiteres Gehäuseteil des Betriebsbremsventil-Gehäuses eingesetzt bzw. dort zentriert.

Dabei wird der obere Anschlag für den Relaiskolben beispielsweise durch einen senkrecht zur Bewegungsrichtung des Relaiskolbens angeordneten Stirnflächenabschnitt des Gehäusedeckels gebildet.

Außerdem ist der elektrische Schalter ein Mikroschalter und sein Betätigungsorgan als ein aus einem Gehäuse des Mikroschalters ragender knopfartiger Stift ausgebildet, welcher von der Stirnfläche des Relaiskolbens zusammenwirkt und von dieser unmittelbar betätigbar ist.

Besonders bevorzugt ist der elektrische Schalter zur Aktivierung eines elektrischen Bremskreises der Bremseinrichtung vorgesehen, um die gesetzlichen Vorgaben hinsichtlich von zwei stets verfügbaren Bremskreisen zu genügen.

Für die Aufnahme des elektrischen Schalters im oder am Betriebsbremsventil-Gehäuse sind dann in vorteilhafter Weise keine zusätzlichen Bauteile notwendig als lediglich bereits vorhandene Bauteile und Baugruppen hierfür herangezogen werden.

Dann erzeugt der elektrische Schalter in einer Anschlagposition, in welcher der Relaiskolben am Anschlag des Gehäusedeckels des Betriebsbremsventil-Gehäuses angeschlagen ist, ein eine gelöste Bremse repräsentierendes Signal und in einer Position, in welcher der Relaiskolben vom Anschlag des Gehäusedeckels des Betriebsbremsventil-Gehäuses gerade abgehoben ist, ein ein Bremsanforderungssignal oder eine zugespannte Bremse repräsentierendes Signal.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt die einzige Figur einen Längsschnitt durch einen oberen Teil eines Betriebsbremsventils gemäß einer bevorzugten Ausführungsform der Erfindung.

### Beschreibung des Ausführungsbeispiels

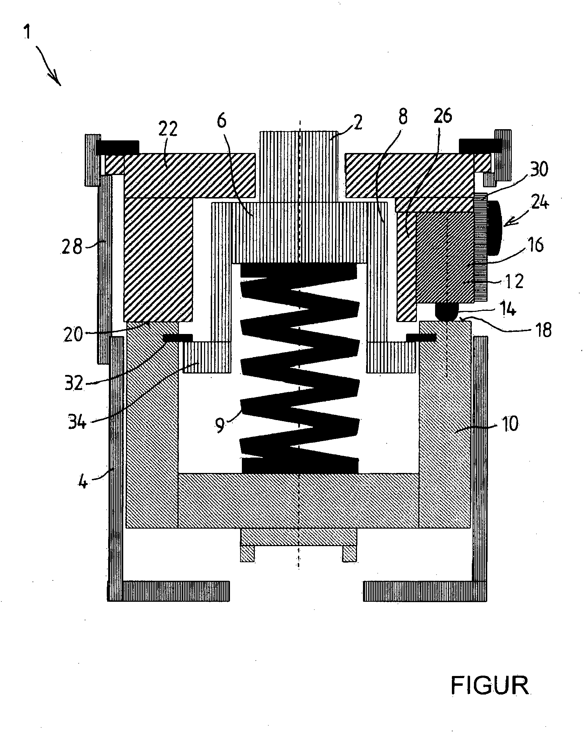

Der in Fig.1 gezeigte obere Teil eines Betriebsbremsventils 1 ist gemäß einer bevorzugten Ausführungsform in ein Fußbremsmodul einer elektropneumatischen Bremsanlage eines Nutzfahrzeugs integriert. Die Bremsanlage weist beispielsweise einen elektrischen und wenigstens einen pneumatischen Bremskreis auf. Ein solches Fußbremsmodul ist hinreichend bekannt beispielsweise aus dem Kraftfahrtechnischen Taschenbuch, Herausgeber Robert Bosch GmbH, 26. Auflage 2007, Seiten 876 bis 877.

Das Betriebsbremsventil 1 beinhaltet unter anderem einen von einer hier nicht gezeigten Fußbremsplatte betätigten Stößel 2, welcher mit einer in einem Betriebsbremsventil-Gehäuse 4 axial beweglichen kolbenartigen Stößelaufnahme 6 zusammen wirkt. Diese Stößelaufnahme 6 weist einen Federteller 8 auf, an welchem Federmittel, insbesondere eine Schraubendruckfeder 9 abgestützt sind, die andererseits an einem Reaktionskolben 10 abgestützt sind. Der Relaiskolben 10 wirkt in bekannter Weise auf ein Doppelsitzventil, um in wenigstens einem pneumatischen Kanal einen Steuerdruck bzw. Bremsdruck für den wenigstens einen pneumatischen Bremskreis zu erzeugen. Daneben ist eine hier ebenfalls nicht sichtbare Sensoreinrichtung vorhanden, um ein gemäß einer Betätigung der Fußbremsplatte entsprechendes elektrisches Signal für einen elektrischen Kanal des Betriebsbremsventils 1 zu erzeugen, welcher wiederum dem elektrischen Bremskreis zugeordnet ist.

Der Relaiskolben 10 betätigt wenigstens einen elektrischen Schalter, hier vorzugsweise einen Mikroschalter 12 derart, dass der Mikroschalter 12 ein elektrisches Signal erzeugt bzw. ändert (Verbindung oder Trennung eines elektrischen Kreises) und dadurch eine bestimmte Lage des Reaktionskolbens 10 relativ zum Betriebsbremsventil-Gehäuse 4 bzw. zu dem im BetriebsbremsventilGehäuse 4 stationär gelagerten Mikroschalter 12 signalisiert. Hierzu weist der Mikroschalter 12 ein hier beispielsweise knopfartiges und in Bewegungsrichtung des Relaiskolbens 10 betätigbares Betätigungsorgan 14 auf, welches aus einem Gehäuse 16 des Mikroschalters 12 herausragt und einer in der Figur oberen Stirnfläche 18 des Relaiskolbens 10 gegenüberliegt.

Besonders bevorzugt ist der Mikroschalter 12 zur Aktivierung eines elektrischen Bremskreises der Bremsanlage vorgesehen und bevorzugt handelsüblich, wobei sein Gehäuse 16 plattenförmig ausgebildet ist, d.h. seine flächige Ausdehnung ist größer als seine in Fig.1 sichtbare Dicke. Weiterhin weist das Gehäuse 16 des Mikroschalters 12 beispielsweise zwei senkrecht zur Plattenebene seiner plattenförmigen Ausbildung verlaufende Durchgangsbohrungen auf, welche in der Ansicht der Figur nicht sichtbar sind und etwa senkrecht zur axialen Bewegungsrichtung des Relaiskolbens 10 verlaufen.

Der Mikroschalter 12 ist in dem Betriebsbremsventil-Gehäuse 4 derart angeordnet, dass die senkrecht zur Bewegungsrichtung des Relaiskolbens 10 angeordnete und in der Figur obere Stirnfläche 18 des Relaiskolbens das Betätigungsorgan 14 des Mikroschalters 12 unmittelbar betätigen kann, wobei die Betätigungsrichtung des Betätigungsorgans 14 des Mikroschalters 12 parallel zur axialen Bewegungsrichtung des Relaiskolbens 10 innerhalb des Betriebsbremsventil-Gehäuses 4 ist.

Besonders bevorzugt ist der Mikroschalter 12 in einem einen oberen Anschlag 20 für den Relaiskolben 10 aufweisenden Gehäusedeckel 22 des Betriebsbremsventil-Gehäuses 4 gehalten, insbesondere in einer zum Relaiskolben 10 hin zumindest teilweise offenen Ausnehmung 24 in einer zylindrischen Wandung 26 des Gehäusedeckels 22. In dieser Ausnehmung 24 und genauer an der Wandung 26 ist dann der Mikroschalter 12 beispielsweise durch zwei Schrauben fixiert, welche durch seine beiden oben beschriebenen Durchgangsbohrungen gesteckt sind.

Mit seiner zylindrischen Wandung 26 ist der Gehäusedeckel 22 beispielsweise in ein weiteres Gehäuseteil 28 des Betriebsbremsventil-Gehäuses 4 eingesetzt bzw. dort zentriert. Der obere Anschlag 20 für den Relaiskolben 10 wird beispielsweise durch einen senkrecht zur axialen Bewegungsrichtung des Relaiskolbens 10 angeordneten Stirnflächenabschnitt des Gehäusedeckels 22 gebildet. Dabei sind der Stößel 2, die Stößelaufnahme 6, der Federteller 8, die Federmittel 9, der Relaiskolben 10 und wenigstens der Gehäusedeckel 22 koaxial angeordnet.

Der Mikroschalter 12 weist beispielsweise an seiner nach radial außen weisenden Seitenfläche in der Figur nicht explizit gezeigte Steckkontakte auf, welche senkrecht zu seiner Plattenebene angeordnet sind und bevorzugt in Aufnahmebohrungen einer ihn unmittelbar kontaktierenden Leiterplatte 30 aufgenommen bzw. dort gebondet sind, um Leiterbahnen auf der Leiterplatte 30 elektrisch kontaktieren zu können. Dadurch kann der Mikroschalter 12 elektrische Signale in eine elektronische Auswerte- und/oder Steuerelektronik übertragen, welche beispielsweise auf der Leiterplatte angeordnet ist. Weiterhin kontaktiert die nach radial innen gerichtete Seitenfläche des Mikroschalters 12 eine radial äußere Umfangsfläche der Ausnehmung 24 bzw. der Wandung 26, so dass der Mikroschalter 12 in radialer Richtung gesehen zwischen der Leiterplatte 30 und der radial äußeren Umfangsfläche der Ausnehmung 24 bzw. der Wandung 26 des Gehäusedeckels 22 gehalten ist und die genannten Flächen unmittelbar und direkt kontaktiert.

Dann erzeugt der Mikroschalter 12 in einer oberen Anschlagposition, in welcher der Relaiskolben 10 am oberen Anschlag 20 des Gehäusedeckels 22 des Betriebsbremsventil-Gehäuses 4 angeschlagen ist, ein eine gelöste Bremse repräsentierendes Signal. Wenn dann ausgehend von dieser Nulllage der Fahrer die Fußbremsplatte niederdrückt, bewegt sich der Stößel 2 in der Figur axial nach unten, wobei diese nach unten gerichtete Bewegung über die Federmittel 9 auf den Relaiskolben 10 übertragen werden, welcher sich in dieser Anfangsphase der Bremsbetätigung noch synchron mit dem Stößel 2 bewegt und sodann vom oberen Anschlag 20 am Gehäusedeckel 22 abhebt. Sobald der Relaiskolben 10 gerade vom oberen Anschlag 20 abgehoben ist, erzeugt er ein Bremsanforderungssignal oder eine zugespannte Bremse repräsentierendes Signal, indem er einen elektrischen Kreis schließt oder trennt.

Wenn sich der Stößel durch Entlastung der Fußbremsplatte wieder nach oben bewegt, um die Bremse zu lösen, dann nimmt die Stößelaufnahme 6 beispielsweise mittels eines in den Relaiskolben 10 eingesetzten Sprengrings 32, welcher von einem Kragen 34 der Stößelaufnahme 6 hintergriffen wird, den Relaiskolben 10 mit.

### Bezugszeichenliste

- 1: Betriebsbremsventil
- 2: Stößel
- 4: Betriebsbremsventil-Gehäuse
- 6: Stößelaufnahme
- 8: Federteller
- 9: Federmittel
- 10: Relaiskolben
- 12: Mikroschalter
- 14: Betätigungsorgan
- 16: Gehäuse
- 18: Stirnfläche
- 20: oberer Anschlag
- 22: Gehäusedeckel
- 24: Ausnehmung
- 26: Wandung
- 28: Gehäuseteil
- 30: Leiterplatte
- 32: Sprengring
- 34: Kragen

## Patentansprüche

1. Betriebsbremsventil (1) für wenigstens einen pneumatischen Bremskreis einer pneumatischen oder elektro-pneumatischen Bremseinrichtung eines Fahrzeugs, beinhaltend ein Betriebsbremsventil-Gehäuse (4), einen von einer Fußbremsplatte betätigbaren Stößel (2), eine Stößelaufnahme (6) mit Federteller (8), Federmittel (9) zur Übertragung der auf den Stößel (2) wirkenden Betätigungskräfte auf wenigstens einen Relaiskolben (10) sowie wenigstens einen elektrischen Schalter (12) zum Ändern eines elektrischen Signals unmittelbar nach Betätigung der Fußbremsplatte, wobei
a) das Betriebsbremsventil-Gehäuse (4) einen Gehäusedeckel (22) aufweist, und
b) der elektrische Schalter (12) in dem Betriebsbremsventil-Gehäuse (4) gehalten ist, wobei der elektrische Schalter (12) in dem Gehäusedeckel (22) des Betriebsbremsventil-Gehäuses (4) gehalten ist,
**dadurch gekennzeichnet, dass**
c) der Gehäusedeckel (22) einen Anschlag (20) für eine senkrecht zur Bewegungsrichtung des Relaiskolbens (10) angeordnete Stirnfläche (18) des Relaiskolbens (10) aufweist, gegen welchen dieser bei gelöster Bremse anschlägt, und dass
d) der elektrische Schalter (12) unmittelbar vom Relaiskolben (10) betätigbar ist, wobei die senkrecht zur Bewegungsrichtung des Relaiskolbens (10) angeordnete Stirnfläche (18) des Relaiskolbens (10) ein Betätigungsorgan (14) des elektrischen Schalters (12) unmittelbar betätigt, und dass
e) der elektrische Schalter (12) ein Mikroschalter und sein Betätigungsorgan (14) als ein aus einem Gehäuse (16) des Mikroschalters (12) ragender knopfartiger Stift ausgebildet ist, welcher von der Stirnfläche (18) des Relaiskolbens (10) unmittelbar betätigbar ist, und dass
f) die Betätigungsrichtung des Betätigungsorgans (14) des elektrischen Schalters (12) parallel zur Bewegungsrichtung des Relaiskolbens (10) ist.

2. Betriebsbremsventil nach Anspruch 1, **dadurch gekennzeichnet, dass** der elektrische Schalter (12) zur Aktivierung eines elektrischen Bremskreises der Bremseinrichtung vorgesehen ist.

3. Betriebsbremsventil nach einem der vorhergehenden Ansprüche, **dadurch gekennzeichnet, dass** der elektrische Schalter (12) in einer zum Relaiskolben (10) hin zumindest teilweise offenen Ausnehmung (24) einer zylindrischen Wandung (26) des Gehäusedeckels (22) gehalten ist.

4. Betriebsbremsventil nach einem der vorhergehenden Ansprüche, **dadurch gekennzeichnet, dass** der Gehäusedeckel (22) mit der zylindrischen Wandung (26) an einem weiteren Gehäuseteil (28) des Betriebsbremsventil-Gehäuses (4) gehalten ist.

5. Betriebsbremsventil nach einem der vorhergehenden Ansprüche, **dadurch gekennzeichnet, dass** der Anschlag (20) für den Relaiskolben (10) durch einen senkrecht zur Bewegungsrichtung des Relaiskolbens (10) angeordneten Stirnflächenabschnitt des Gehäusedeckels (22) gebildet wird.

6. Betriebsbremsventil nach einem der vorhergehenden Ansprüche, **dadurch gekennzeichnet, dass** der elektrische Schalter (12) in einer Anschlagposition, in welcher der Relaiskolben (10) am Anschlag (20) des Gehäusedeckels (22) des Betriebsbremsventil-Gehäuses (4) angeschlagen ist, ein eine gelöste Bremse repräsentierendes Signal und in einer Position, in welcher der Relaiskolben (10) vom Anschlag (20) des Gehäusedeckels (22) des Betriebsbremsventil-Gehäuses (4) gerade abgehoben ist, ein ein Bremsanforderungssignal oder eine zugespannte Bremse repräsentierendes Signal erzeugt.

## Claims

1. Service brake valve (1) for at least one pneumatic brake circuit of a pneumatic or electropneumatic braking device of a vehicle, containing a service brake valve housing (4), a tappet (2) actuable by a foot brake plate, a tappet receptacle (6) with a spring plate (8), spring means (9) for transmitting the actuating forces acting on the tappet (2) to at least one relay piston (10), and at least one electric switch (12) for changing an electric signal directly after actuation of the foot brake plate, wherein
a) the service brake valve housing (4) has a housing cover (22), and
b) the electric switch (12) is held in the service brake valve housing (4), wherein the electric switch (12) is held in the housing cover (22) of the service brake valve housing (4),
**characterized in that**
c) the housing cover (22) has a stop (20) for an end face (18) of the relay piston (10), said face being arranged perpendicularly to the direction of movement of the relay piston (10), against which stop the latter strikes when the brake is released, and **in that**
d) the electric switch (12) can be actuated directly by the relay piston (10), wherein the end face (18) of the relay piston (10), said face being arranged perpendicularly to the direction of movement of the relay piston (10), directly actuates an actuating member (14) of the electric switch (12), and **in that**
e) the electric switch (12) is a microswitch and the actuating member (14) thereof is designed as a button-type pin which projects from a housing (16) of the microswitch (12) and which can be actuated directly by the end face (18) of the relay piston (10), and **in that**
f) the direction of actuation of the actuating member (14) of the electric switch (12) is parallel to the direction of movement of the relay piston (10).

2. Service brake valve according to Claim 1, **characterized in that** the electric switch (12) is provided for the activation of an electric brake circuit of the braking device.

3. Service brake valve according to either of the preceding claims, **characterized in that** the electric switch (12) is held in a recess (24) of a cylindrical wall (26) of the housing cover (22), said recess being at least partially open toward the relay piston (10).

4. Service brake valve according to one of the preceding claims, **characterized in that** the housing cover (22) is held with the cylindrical wall (26) against a further housing part (28) of the service brake valve housing (4).

5. Service brake valve according to one of the preceding claims, **characterized in that** the stop (20) for the relay piston (10) is formed by an end face portion of the housing cover (22) which is arranged perpendicularly to the direction of movement of the relay piston (10).

6. Service brake valve according to one of the preceding claims, **characterized in that**, in a stop position, in which the relay piston (10) has struck the stop (20) of the housing cover (22) of the service brake valve housing (4), the electric switch (12) produces a signal representing a released brake and, in a position in which the relay piston (10) is just raised from the stop (20) of the housing cover (22) of the service brake valve housing (4), said switch produces a signal representing a braking demand signal or an applied brake.

## Revendications

1. Soupape de frein de service (1) d'au moins un circuit de freinage pneumatique d'un dispositif de frein pneumatique ou électropneumatique d'un véhicule, comportant un corps (4) de soupape de frein de service, un poussoir (2) actionnable par une plaque de pédale de frein, en logement (6) de poussoir ayant une coupelle de ressort (8), des moyens de ressort (9) pour transférer des forces d'actionnement qui s'appliquent au poussoir (2) à au moins un piston relais (10), ainsi qu'au moins un interrupteur (12) électrique pour changer un signal électrique immédiatement après l'actionnement de la plaque de pédale de frein, dans laquelle
a) le corps (4) de soupape de frein de service a un couvercle (22), et
b) l'interrupteur (12) électrique est retenu dans le corps (4) de soupape de frein de service, l'interrupteur (12) électrique étant retenu dans le couvercle (22) du corps (4) de soupape de frein de service,
**caractérisée en ce que**
c) le couvercle (22) du corps a une butée (20) pour une surface (18) frontale du piston relais (10), qui est disposée perpendiculairement à la direction de déplacement du piston relais (10) et contre laquelle elle bute, lorsque le frein est desserré, et **en ce que**
d) l'interrupteur (12) électrique peut être actionné directement par le piston relais (10), la surface (18) frontale du piston relais (10), qui est disposée perpendiculairement à la direction de déplacement du piston relais (10), actionne directement un organe (14) d'actionnement de l'interrupteur (12) électrique, et **en ce que**
e) l'interrupteur (12) électrique est un micro-interrupteur et son organe (14) d'actionnement est constitué sous la forme d'une broche de type bouton sortant d'un boîtier (16) du micro-interrupteur (12) et pouvant être actionnée directement par la surface (18) frontale du piston relais (10), et **en ce que**
f) la direction d'actionnement de l'organe (14) d'actionnement de l'interrupteur (12) électrique est parallèle à la direction de déplacement du piston relais (10).

2. Soupape de frein de service suivant la revendication 1, **caractérisée en ce que** l'interrupteur (12) électrique est prévu pour l'activation d'un circuit électrique de frein du dispositif de frein.

3. Soupape de frein de service suivant l'une des revendications précédentes, **caractérisée en ce que** l'interrupteur (12) électrique est maintenu dans un évidement (24), ouvert au moins en partie vers le piston relais (10), d'une paroi (26) cylindrique du couvercle (22) du corps.

4. Soupape de frein de service suivant l'une des revendications précédentes, **caractérisé en ce que** le couvercle (22) du corps est retenu par la paroi (26) cylindrique sur une autre partie (28) du corps (4) de soupape de frein de service.

5. Soupape de frein de service suivant l'une des revendications précédentes, **caractérisée en ce que** la butée (20) pour le piston relais (10) est formée d'une partie de surface frontale du couvercle (22) du corps, disposée perpendiculairement à la direction de déplacement du piston relais (10).

6. Soupape de frein de service suivant l'une des revendications précédentes, **caractérisée en ce que** l'interrupteur (12) électrique produit, dans une position de butée, dans laquelle le piston relais (10) est en butée sur la butée (20) du couvercle (22) du corps (4) de soupape de frein de service, un signal représentant un frein desserré et, dans une position, dans laquelle le piston (10) relais est précisément soulevé de la butée (20) du couvercle (22) du corps (4) de soupape de frein de service, produit un signal de demande de frein ou un signal représentant un frein serré.
